# EUROPEAN PATENT APPLICATION

(11) **EP 2 813 989 A2**
(43) Date of publication of application: **17.12.2014**
(21) Application number: 12760803.2
(22) Date of filing: 08.05.2012
(51) Int. Cl.: G06Q 30/02

(54) **SEARCH METHOD AND DEVICE BASED ON E-COMMERCE PLATFORM**

(71) Applicant: Huawei Technologies Co., Ltd., Shenzhen, Guangdong 518129 (CN)
(72) Inventor: DONG, Xin, Shenzhen Guangdong 518129 (CN); BAI, Zhiwen, Shenzhen Guangdong 518129 (CN); JIANG, Chao, Shenzhen Guangdong 518129 (CN)
(74) Representative: Isarpatent
(86) International application number: PCT/CN2012/075193
(87) International publication number: WO 2012/126417

(57) **Abstract**

The present invention relates to the field of e-commerce, and in particular to a search method and apparatus based on an e-commerce platform. An embodiment of the present invention provides a search method based on an e-commerce platform. The e-commerce platform searches for, according to a search keyword sent by a first client, based on a location of the first client and in an area range of a search radius, commodities meeting a condition, and sends detailed information about the commodities found through searching to the first client. According to the method provided in the embodiment of the present invention, a consumer may shop nearby in an expected area range, thereby improving consumer's shopping experience.

## Description

### TECHNICAL FIELD

The present invention relates to the field of e-commerce, and in particular to a search method and apparatus based on an e-commerce platform.

### BACKGROUND

As a new way to trade, e-commerce allows a buyer and a seller to perform a variety of commercial and trade activities without meeting each other. In the e-commerce environment, people are no longer subject to geographical constraints, and users are capable of completing, in an extremely simple way, business activities that were complicated in the past.

An existing e-commerce platform, such as Taobao, provides users with a complete commodity trading platform. After strictly classifying and describing in detail commodities to be sold, a merchant may display the commodities to be sold on a customized commodity display page. The e-commerce platform sequences commodities of the same type according to credibility of merchants, or click-through rates or sales volume of the commodities. For example, the commodities of the same type are sequenced in descending order of click-through rates of the commodities.

By analyzing the prior art, the inventor finds at least the following problems in the prior art:

A consumer market to which the existing e-commerce platform is oriented is not geographically constrained. When a consumer is shopping, commodity information found through searching according to a keyword is sequenced based on a factor such as credibility of merchants, or click-through rates or sales volume of commodities. In this way, the consumer may purchase a commodity from a distant merchant. An existing logistics system is not perfect, and defects that goods are not timely delivered and service is imperfect exist, thereby seriously affecting consumer's shopping experience.

### SUMMARY

Regarding the defects in the prior art, embodiments of the present invention aim to provide a search method and apparatus based on an e-commerce platform, so that a consumer may purchase a commodity nearby, thereby improving consumer's shopping experience.

According to one aspect, an embodiment of the present invention provides a search method based on an e-commerce platform, where the method includes:
receiving, by an e-commerce platform, a search request sent by a first client, where the search request carries a search keyword, a search radius, and information about a location of the first client;
searching, by the e-commerce platform and according to the search keyword, a database that is used to store commodity information for detailed information about commodities that match the search keyword and whose distances to the location of the first client are less than the search radius; and
sending, by the e-commerce platform, a search response to the first client, where the search response carries the detailed information about the commodities found through searching.

According to another aspect, an embodiment of the present invention provides a search method based on an e-commerce platform, where the method includes:
acquiring, by a first client, information about its location;
sending, by the first client, a search request to an e-commerce platform, where the search request carries a search keyword, a search radius, and the information about the location of the first client; and
receiving, by the first client, a search response sent by the e-commerce platform, where the search response carries detailed information about commodities, the detail information about the commodities is found, in a database that is used to store commodity information, through searching by the e-commerce platform according to the search keyword, and distances between locations of the commodities and the location of the first client are less than the search radius.

According to one aspect, an embodiment of the present invention provides an e-commerce platform, including:
a receiving module, configured to receive a search request sent by a first client, where the search request carries a search keyword, a search radius, and information about a location of the first client;
a searching module, configured to search, according to the search keyword received by the receiving module, a database that is used to store commodity information for detailed information about commodities that match the search keyword and whose distances to the location of the first client are less than the search radius; and
a sending module, configured to send a search response to the first client, where the search response carries the detailed information about the commodities found through searching by the searching module.

According to another aspect, an embodiment of the present invention provides a client performing a search based on an e-commerce platform, where the client includes:
a location information acquiring module, configured to acquire information about a location of the client;
a sending module, configured to send a search request to the e-commerce platform, where the search request carries a search keyword, a search radius, and the information which is about the location and is acquired by the location information acquiring module; and
a receiving module, configured to receive a search response sent by the e-commerce platform, where the search response carries detailed information about commodities, the detail information about the commodities is found, in a database that is used to store commodity information, through searching by the e-commerce platform according to the search keyword sent by the sending module, and distances between locations of the commodities and the location of the client are less than the search radius.

According to the search method and apparatus based on an e-commerce platform that are provided in the embodiments of the present invention, the e-commerce platform searches for, according to a search keyword sent by a first client, based on a location of the first client and in an area range of a search radius, commodities meeting a condition, so that a consumer may shop nearby in an expected area range, thereby improving consumer's shopping experience.

### BRIEF DESCRIPTION OF DRAWINGS

FIG. 1 is an architecture diagram of a system based on an e-commerce platform according to an embodiment of the present invention;
FIG. 2 is a schematic diagram of a search method based on an e-commerce platform according to an embodiment of the present invention;
FIG. 3 is a schematic diagram of another search method based on an e-commerce platform according to an embodiment of the present invention;
FIG. 4A and FIG. 4B are schematic diagram of still another search method based on an e-commerce platform according to an embodiment of the present invention;
FIG. 5 is a schematic structural diagram of an e-commerce platform according to an embodiment of the present invention; and
FIG. 6 is a schematic structural diagram of a client performing a search based on an e-commerce platform according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely part rather than all of the embodiments of the present invention. All other embodiments obtained by persons of ordinary skill in the art based on the embodiments of the present invention without creative efforts shall fall within the protection scope of the present invention.

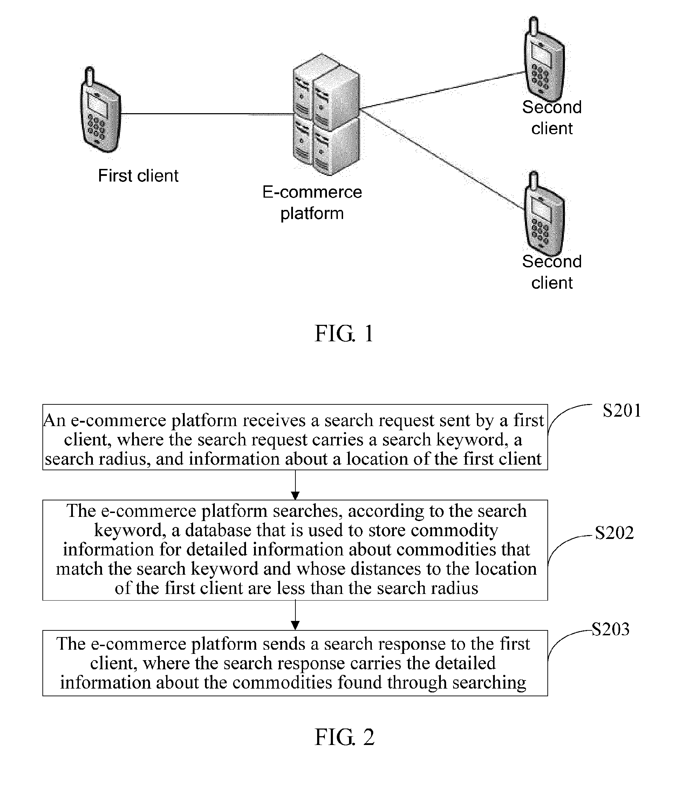

FIG. 1 is an architecture diagram of a system based on an e-commerce platform according to an embodiment of the present invention. A second client may shelve a commodity to be sold by a merchant onto an e-commerce platform by sending a commodity shelving request to the e-commerce platform. A first client may search for, based on its location and in a certain area range, a commodity meeting a consumer's requirement.

The e-commerce platform may include one or more servers, which is not limited in the present invention.

The first client may include various computers, netbooks, mobile phone terminals or other devices that are capable of accessing the Internet.

The second client may include various computers, netbooks, mobile phone terminals or other devices that are capable of accessing the Internet.

Based on the architecture diagram of the system shown in FIG. 1, an embodiment of the present invention provides a search method based on an e-commerce platform, where the method includes:

S201: An e-commerce platform receives a search request sent by a first client, where the search request carries a search keyword, a search radius, and information about a location of the first client.

The search keyword may include a name of a commodity. Alternatively, the search keyword may also include another feature of the commodity, for example, a name of a merchant to which the commodity belongs.

The information about the location of the first client may include longitude and latitude of the location of the first client.

S202: The e-commerce platform searches, according to the search keyword, a database that is used to store commodity information for detailed information about commodities that match the search keyword and whose distances to the location of the first client are less than the search radius.

It should be noted that a distance between a location of each of the commodities found through searching by the e-commerce platform in the database that is used to store commodity information and the location of the first client is less than the search radius.

A case in which "the distance is less than the search radius" may include a case in which the distance is equal to the search radius, which is not limited in the present invention.

Alternatively, before the e-commerce platform receives the search request sent by the first client, the e-commerce platform may receive a commodity shelving request sent by a second client, where the commodity shelving request carries detailed information about a commodity. The e-commerce platform saves the detailed information about the commodity into the database that is used to store commodity information, so that the first client may find a corresponding commodity through searching.

S203: The e-commerce platform sends a search response to the first client, where the search response carries the detailed information about the commodities found through searching.

Before the e-commerce platform sends the search response to the first client, the e-commerce platform may sequence, in ascending order of distances, the detailed information about the commodities found through searching, where the distances are distances between locations of the commodities and the location of the first client.

In this case, a manner for the e-commerce platform to send the search response to the first client may include the following manner:

The e-commerce platform sends the search response to the first client, where the search response carries the sequenced detailed information about the commodities; in this case, the first client may display the sequenced detailed information about the commodities on a display interface in a web page form, where the higher the ranking of a commodity is, the smaller a distance between a location of the commodity and the location of the first client is.

Alternatively, after the e-commerce platform sends the search response to the first client, the first client may display the received detailed information about the commodities on corresponding positions on an e-map according to the locations of the commodities, where the received detailed information about the commodities includes information about the locations of the commodities.

Alternatively, the first client may display, by using its display interface, the e-map to a consumer.

Alternatively, the detailed information about the commodities may further include names of the commodities, prices of the commodities, description of the commodities, and identifiers of merchants to which the commodities belong.

For exemplary rather than limitation, the first client may display, on the e-map, the location of the first client and the locations of the commodities found through searching by the e-commerce platform; and alternatively, the first client may also display, on a location of a commodity, information such as a name and price of the commodity and an identifier of a merchant to which the commodity belongs.

According to the search method based on an e-commerce platform provided in this embodiment of the present invention, the e-commerce platform searches for, according to a search keyword sent by a first client, based on a location of the first client and in an area range of a search radius, commodities meeting a condition, so that a consumer may shop nearby in an expected area range, thereby improving consumer's shopping experience. In addition, the e-commerce platform may sequence, in ascending order of distances and based on distances between locations of the commodities found through searching and the location of the first client, detailed information about the commodities found through searching, so that a commodity near the consumer ranks in the front, thereby improving a probability that the consumer purchases a commodity from a nearest merchant. Further, after receiving the detailed information which is about the commodities and is sent by the e-commerce platform, the first client displays the received detailed information about the commodities on corresponding positions on an e-map, so that the consumer may intuitively learn geographical position information of a surrounding merchant, thereby further improving the consumer's shopping experience.

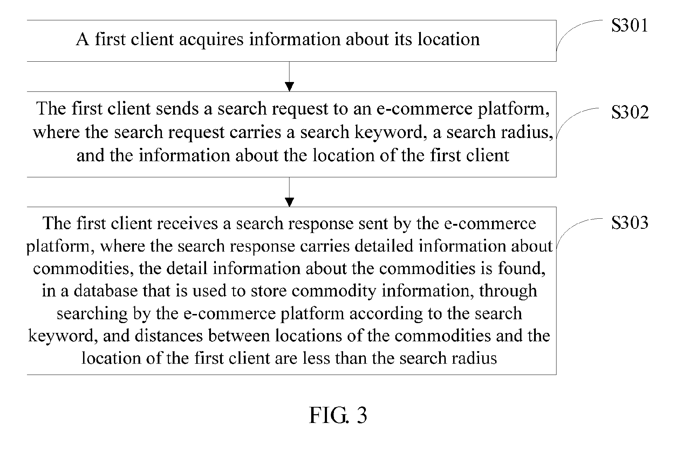

FIG. 3 is a schematic diagram of a search method based on an e-commerce platform according to an embodiment of the present invention, where the method includes:

S301: A first client acquires information about its location.

The information about the location of the first client may include longitude and latitude of the location of the first client.

The first client may acquire the information about its location by using a global positioning system (Global Position System, GPS for short).

If the first client is a mobile phone terminal, the first client may also acquire the information about its location by using a location positioning service provided by a mobile communications operator.

S302: The first client sends a search request to an e-commerce platform, where the search request carries a search keyword, a search radius, and the information about the location of the first client.

The search keyword may include a name of a commodity. Alternatively, the search keyword may also include another feature of the commodity, for example, a name of a merchant to which the commodity belongs.

S303: The first client receives a search response sent by the e-commerce platform, where the search response carries detailed information about commodities, the detail information about the commodities is found, in a database that is used to store commodity information, through searching by the e-commerce platform according to the search keyword, and distances between locations of the commodities and the location of the first client are less than the search radius.

A distance between a location of each of the commodities found through searching by the e-commerce platform in the database that is used to store commodity information and the location of the first client is less than the search radius.

A case in which "the distance is less than the search radius" may include a case in which the distance is equal to the search radius, which is not limited in the present invention.

Alternatively, after the first client receives the search response sent by the e-commerce platform, the first client may display the detailed information about the commodities on corresponding positions on an e-map according to the locations of the commodities, where the detailed information about the commodities includes information about the locations of the commodities.

Alternatively, the detailed information about the commodities may further include names of the commodities, prices of the commodities, description of the commodities, and identifiers of merchants to which the commodities belong.

For exemplary rather than limitation, the first client may display, on the e-map, the location of the first client and the locations of the commodities found through searching by the e-commerce platform; and alternatively, the first client may also display, on a location of a commodity, information such as a name and price of the commodity and an identifier of a merchant to which the commodity belongs.

It should be noted that the first client may display, by using its display interface, the e-map to a consumer.

According to the search method based on an e-commerce platform provided in this embodiment of the present invention, the e-commerce platform searches for, according to a search keyword sent by a first client, based on a location of the first client and in an area range of a search radius, commodities meeting a condition, so that a consumer may shop nearby in an expected area range, thereby improving consumer's shopping experience. In addition, after receiving detailed information which is about the commodities and is sent by the e-commerce platform, the first client displays the received detailed information about the commodities on corresponding positions on an e-map, so that the consumer may intuitively learn geographical position information of a surrounding merchant, thereby further improving the consumer's shopping experience.

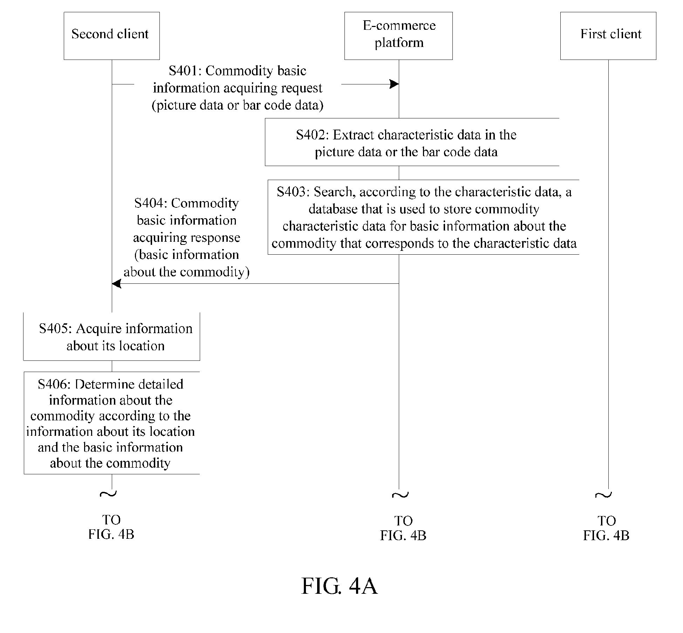

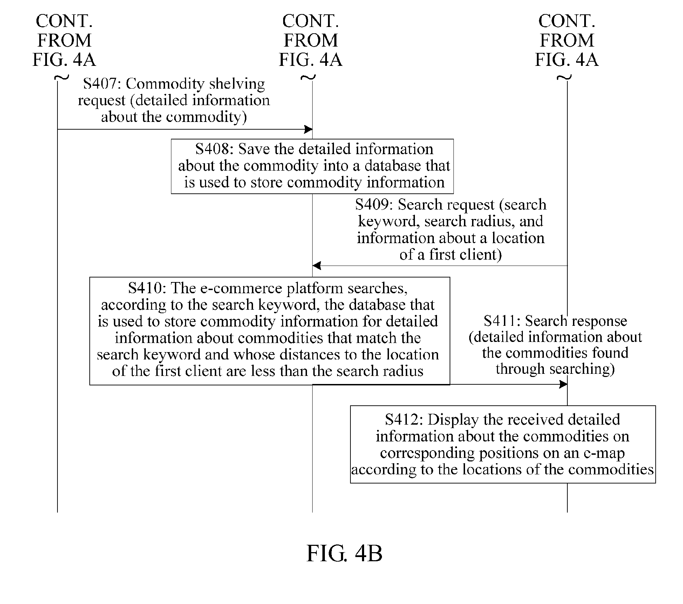

FIG. 4A and FIG. 4B are schematic diagram of a search method based on an e-commerce platform according to an embodiment of the present invention, where the method includes:

S401: A second client sends a commodity basic information acquiring request to an e-commerce platform, where the commodity basic information acquiring request carries picture data or bar code data of a commodity.

The second client may acquire the picture data of the commodity by photographing the commodity, where the picture data includes a series of pixel data.

A manner for the second client to acquire the bar code data of the commodity may include the following manner:

The second client photographs a bar code of the commodity and obtains, by using an image recognition technology, the bar code data from the picture that is obtained through photographing. For example, a bar code of a commodity is ISBN 978-7-5130-0732-0, a bar code picture is obtained by photographing the bar code of the commodity, and bar code data is obtained from the obtained bar code picture by using the image recognition technology. In a specific embodiment, the bar code data may be "ISBN 978-7-5130-0732-0" indicated by a string.

The present invention does not limit a communications protocol between the second client and the e-commerce platform. For exemplary rather than limitation, the second client may use Hypertext Transfer Protocol (Hypertext Transfer Protocol, HTTP for short) to communicate with the e-commerce platform.

S402: The e-commerce platform extracts characteristic data in the picture data or the bar code data.

A manner for the e-commerce platform to extract the characteristic data may include any one of the following manners:

Manner 1: When the commodity information acquiring request carries the picture data of the commodity, the e-commerce platform extracts the characteristic data from the picture data by using a mode recognition technology. For example, for exemplary rather than limitation, if a type of the commodity may be recognized according to a contour of the commodity, contour data extracted from the picture data is used as the characteristic data.

Manner 2: When the commodity information acquiring request carries the bar code data of the commodity, the e-commerce platform may directly obtain the characteristic data of the commodity. For example, for exemplary rather than limitation, if the bar code data of the commodity is "ISBN 978-7-5130-0732-0" indicated by a string, the e-commerce platform may directly use the bar code data as the characteristic data.

S403: The e-commerce platform searches, according to the characteristic data, a database that is used to store commodity characteristic data for basic information about the commodity that corresponds to the characteristic data.

The database that is used to store commodity characteristic data saves correspondence between characteristic data and basic information about commodities. The e-commerce platform may found, through searching the database according to the characteristic data, the basic information about the commodity that corresponds to the characteristic data.

It should be noted that the basic information about the commodity is used to describe common basic information about commodities of the same type as the commodity; and a merchant may obtain, according to basic information about a commodity, detailed information about a commodity to be sold, thereby improving efficiency of publishing the commodity for the merchant.

The basic information about the commodity may include a name of the commodity and description of the commodity.

S404: The e-commerce platform sends a commodity basic information acquiring response to the second client, where the commodity basic information acquiring response carries the basic information about the commodity.

S405: The second client acquires information about its location.

The information about the location of the second client may include longitude and latitude of the location of the second client.

The second client may acquire the information about its location by using a global positioning system.

If the second client is a mobile phone terminal, the second client may also acquire the information about its location by using a location positioning service provided by a mobile communications operator.

It should be noted that step S406 may be performed before, after, or at the same time of any one of step S401 to step S405. The present invention does not limit a sequence for performing step S406 and any one of step S401 to step S405.

S406: The second client determines detailed information about the commodity according to the information about its location and the basic information about the commodity.

For exemplary rather than limitation, the second client may directly combine the information about its location and the basic information about the commodity as the detailed information about the commodity; and alternatively, after the second client receives the basic information about the commodity, the merchant makes a modification based on the basic information about the commodity, and combines the modified information and the information about the location of the second client as the detailed information about the commodity.

S407: The second client sends a commodity shelving request to the e-commerce platform, where the commodity shelving request carries the detailed information about the commodity.

It should be noted that the location of the second client is a location of the commodity to be sold by the merchant. After obtaining the information about its location, the second client sends the information about its location to the e-commerce platform, so that the e-commerce platform may learn the location of the commodity to be sold by the merchant.

S408: The e-commerce platform saves the detailed information about the commodity into a database that is used to store commodity information.

After saving the detailed information about the commodity, the e-commerce platform may send a commodity shelving success response to the second client to instruct the merchant that the commodity to be sold has been shelved successfully.

Alternatively, the e-commerce platform may examine the commodity before sending the commodity shelving success response to the second client. When the examination succeeds, the e-commerce platform sends the commodity shelving success response to the second client; and when the examination fails, the e-commerce platform sends a commodity shelving failure response to the second client to instruct the merchant to perform shelving again.

Alternatively, before the examination is performed, the e-commerce platform may perform, according to a credit rating of the merchant, publishing processing on the commodity to be sold by the merchant. For example, for exemplary rather than limitation, for a merchant with a relatively high credit rating, the e-commerce platform may publish a commodity to be sold by the merchant before the examination, that is, a consumer may find, through searching, the commodity to be sold by the merchant; for a merchant with a relatively low credit rating, the e-commerce platform publishes a commodity to be sold by the merchant only after the examination succeeds.

S409: A first client sends a search request to the e-commerce platform when a consumer intends to purchase the commodity, where the search request carries a search keyword, a search radius, and information about a location of the first client.

The search keyword may include the name of the commodity. Alternatively, the search keyword may also include another feature of the commodity, for example, a name of a merchant to which the commodity belongs.

The information about the location of the first client may include longitude and latitude of the location of the first client.

The information about the location of the first client may include longitude and latitude of the location of the first client.

The first client may acquire the information about its location by using a global positioning system.

If the first client is a mobile phone terminal, the first client may also acquire the information about its location by using a location positioning service provided by a mobile communications operator.

The present invention does not limit a communications protocol between the first client and the e-commerce platform. For exemplary rather than limitation, the first client may use the Hypertext Transfer Protocol to communicate with the e-commerce platform.

S410: The e-commerce platform searches, according to the search keyword, the database that is used to store commodity information for detailed information about commodities that match the search keyword and whose distances to the location of the first client are less than the search radius.

It should be noted that a distance between a location of each of the commodities found through searching by the e-commerce platform in the database that is used to store commodity information and the location of the first client is less than the search radius.

A case in which "the distance is less than the search radius" may include a case in which the distance is equal to the search radius, which is not limited in the present invention.

S411: The e-commerce platform sends a search response to the first client, where the search response carries the detailed information about the commodities found through searching.

Before the e-commerce platform sends, to the first client, the detailed information about the commodities found through searching, the e-commerce platform may sequence, in ascending order of distances, the detailed information about the commodities found through searching, where the distances are distances between locations of the commodities found through searching and the location of the first client.

In this case, a manner for the e-commerce platform to send the search response to the first client may include the following manner:

The e-commerce platform sends the search response to the first client, where the search response carries the sequenced detailed information about the commodities.

S412: The first client displays the received detailed information about the commodities on corresponding positions on an e-map according to the locations of the commodities, where the received detailed information about the commodities includes information about the locations of the commodities.

Alternatively, the detailed information about the commodities may further include names of the commodities, prices of the commodities, description of the commodities, and identifiers of merchants to which the commodities belong.

For exemplary rather than limitation, the first client may display, on the e-map, the location of the first client and the locations of the commodities found through searching by the e-commerce platform; and alternatively, the first client may also display, on a location of a commodity, information such as a name and price of the commodity and an identifier of a merchant to which the commodity belongs.

It should be noted that the first client may display, by using its display interface, the e-map to a consumer.

It should be noted that the database that is used to store commodity information and the database that is used to store commodity characteristic data may be a same database, and may also be different databases, which is not limited in this embodiment of the present invention.

According to the search method based on an e-commerce platform provided in this embodiment of the present invention, the e-commerce platform searches for, according to a search keyword sent by a first client, based on a location of the first client and in an area range of a search radius, commodities meeting a condition, so that a consumer may shop nearby in an expected area range, thereby improving consumer's shopping experience. In addition, the e-commerce platform sequences, in ascending order of distances and based on distances between locations of the commodities found through searching and the location of the first client, detailed information about the commodities found through searching, so that a commodity near the consumer ranks in the front, thereby improving a probability that the consumer purchases a commodity from a nearest merchant. Further, after receiving the detailed information which is about the commodities and is sent by the e-commerce platform, the first client displays the received detailed information about the commodities on corresponding positions on an e-map, so that the consumer may intuitively learn geographical position information of a surrounding merchant, thereby further improving the consumer's shopping experience. Furthermore, after sending a commodity basic information acquiring request to the e-commerce platform, a second client receives basic information which is about a commodity and is sent by the e-commerce platform, so that a merchant may obtain, according to the basic information about the commodity, detailed information about a commodity to be sold, thereby improving efficiency of publishing a commodity for the merchant.

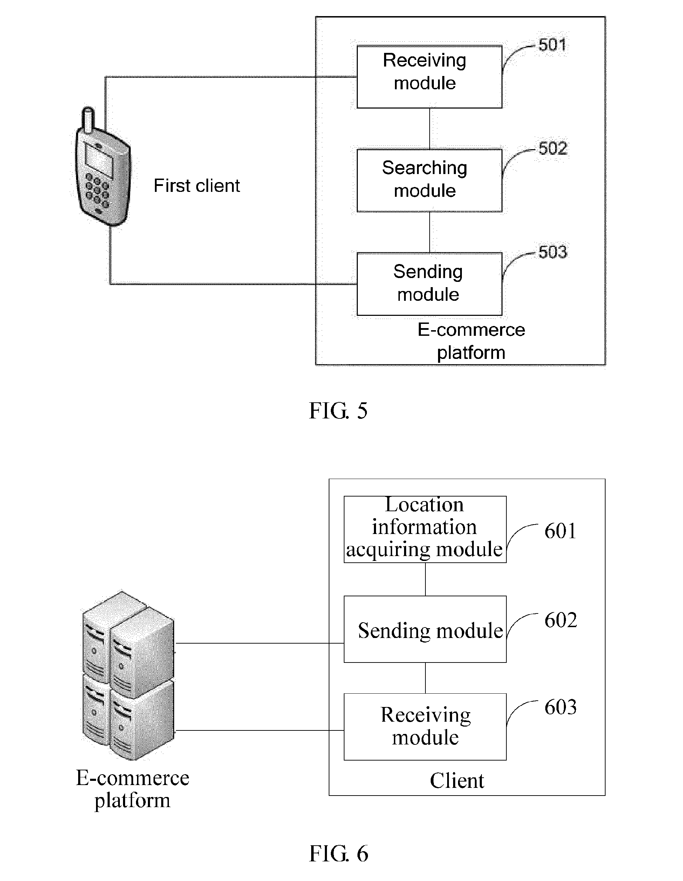

FIG. 5 is a schematic structural diagram of an e-commerce platform according to an embodiment of the present invention, where the e-commerce platform includes:
a receiving module 501, configured to receive a search request sent by a first client, where the search request carries a search keyword, a search radius, and information about a location of the first client;
a searching module 502, configured to search, according to the search keyword received by the receiving module 501, a database that is used to store commodity information for detailed information about commodities that match the search keyword and whose distances to the location of the first client are less than the search radius; and
a sending module 503, configured to send a search response to the first client, where the search response carries the detailed information about the commodities found through searching by the searching module 502.

The e-commerce platform may further include:
a sequencing module, configured to sequence, in ascending order of distances, the detail information about the commodities found through searching by the searching module 502, where the distances are distances between locations of the commodities found through searching by the searching module 502 and the location of the first client.

In this case, the sending module 503 is specifically configured to send the search response to the first client, where the search response carries the detailed information which is about the commodities and is sequenced by the sequencing module.

The receiving module 501 may be further configured to receive a commodity shelving request sent by a second client, where the commodity shelving request carries detailed information about a commodity.

The e-commerce platform further includes:
a saving module, configured to save the detailed information which is about the commodity and is received by the receiving module 501 into the database that is used to store commodity information.

The receiving module 501 may be further configured to receive a commodity basic information acquiring request sent by the second client, where the commodity basic information acquiring request carries picture data or bar code data of the commodity.

In this case, the e-commerce platform may further include a characteristic data extracting module, where the characteristic data extracting module is configured to extract characteristic data in the picture data or bar code data, where the picture data or bar code data is received by the receiving module.

The searching module 502 may be further configured to search, according to the characteristic data extracted by the characteristic data extracting module, a database that is used to store commodity characteristic data for basic information about the commodity that corresponds to the characteristic data, where the basic information about the commodity is used to describe common basic information about commodities of the same type as the commodity.

The sending module 503 may be further configured to send a commodity basic information acquiring response to the second client, where the commodity basic information acquiring response carries the basic information about the commodity found through searching by the searching module 502, so that the second client determines detailed information about the commodity according to the basic information about the commodity.

According to the e-commerce platform provided in this embodiment of the present invention, a searching module searches for, according to a search keyword sent by a first client, based on a location of the first client and in an area range of a search radius, commodities meeting a condition, so that a consumer may shop nearby in an expected area range, thereby improving consumer's shopping experience. In addition, a sequencing module sequences, in ascending order of distances and based on distances between locations of the commodities found through searching by the searching module and the location of the first client, detailed information about the commodities found through searching, so that a commodity near the consumer ranks in the front, thereby improving a probability that the consumer purchases a commodity from a nearest merchant.

FIG. 6 is a schematic structural diagram of a client performing a search based on an e-commerce platform, where the client includes:
a location information acquiring module 601, configured to acquire information about a location of the client;
a sending module 602, configured to send a search request to the e-commerce platform, where the search request carries a search keyword, a search radius, and the information which is about the location and is acquired by the location information acquiring module 601; and
a receiving module 603, configured to receive a search response sent by the e-commerce platform, where the search response carries detailed information about commodities, the detail information about the commodities is found, in a database that is used to store commodity information, through searching by the e-commerce platform according to the search keyword sent by the sending module, and distances between locations of the commodities and the location of the client are less than the search radius.

The client may further include:
a displaying module, configured to display, on corresponding positions on an e-map according to the locations of the commodities, the detailed information which is about the commodities and is received by the receiving module 603, where the detailed information which is about the commodities and is received by the receiving module 603 includes information about the locations of the commodities.

According to the search method and apparatus based on an e-commerce platform that are provided in the embodiments of the present invention, the e-commerce platform searches for, according to a search keyword sent by a first client, based on a location of the first client and in an area range of a search radius, commodities meeting a condition, so that a consumer may shop nearby in an expected area range, thereby improving consumer's shopping experience. In addition, the e-commerce platform sequences, in ascending order of distances and based on distances between locations of the commodities found through searching and the location of the first client, detailed information about the commodities found through searching, so that a commodity near the consumer ranks in the front, thereby improving a probability that the consumer purchases a commodity from a nearest merchant. Further, after receiving the detailed information which is about the commodities and is sent by the e-commerce platform, the first client displays the received detailed information about the commodities on corresponding positions on an e-map, so that the consumer may intuitively learn geographical position information of a surrounding merchant, thereby further improving the consumer's shopping experience. Furthermore, after sending a commodity basic information acquiring request to the e-commerce platform, a second client receives basic information which is about a commodity and is sent by the e-commerce platform, so that a merchant may obtain, according to the basic information about the commodity, detailed information about a commodity to be sold, thereby improving efficiency of publishing a commodity for the merchant.

It can be known from the description of the foregoing embodiments that, persons skilled in the art may clearly understand that all or part of the steps in the method provided in the foregoing embodiments may be implemented in a manner of software plus a necessary general hardware platform. Based on such an understanding, the technical solutions in the present invention essentially, or the part contributing to the prior art may be implemented in a form of a software product. The computer software product may be stored in a storage medium, such as a ROM/ RAM, a magnetic disk, and an optical disk, and includes several instructions for instructing a computer device (which may be a personal computer, a server, a network device, or the like) to perform the method described in the embodiments of the present invention or in some parts of the embodiments of the present invention.

It should be noted that each embodiment in the specification is described in a progressive manner. For same or similar parts in the embodiments, reference may be made to each other. What is different from other embodiments is emphasized in each embodiment. In particular, for the apparatus embodiment, because it is basically similar to the method embodiment, the apparatus embodiment is described simply, and for a process of performing specific functions of each module, reference may be made to part of the description of the method embodiment. The apparatus embodiment described in the foregoing is merely exemplary, the modules described as separate parts may or may not be physically separated, and the parts shown as modules may or may not be physical modules, may be located in one position, or may also be distributed on multiple network modules. Part or all of the modules may be selected according to actual needs to achieve the objectives of the solutions of the embodiments. Persons of ordinary skill in the art may understand and implement the embodiments without creative efforts.

In conclusion, the foregoing descriptions are merely exemplary embodiments of the technical solutions of the present invention, but are not intended to limit the protection scope of the present invention. Any modification, equivalent replacement, or improvement made within the spirit and principle of the present invention shall fall within the protection scope of the present invention.

## Claims

1. A search method based on an e-commerce platform, comprising:
receiving, by an e-commerce platform, a search request sent by a first client, wherein the search request carries a search keyword, a search radius, and information about a location of the first client;
searching, by the e-commerce platform and according to the search keyword, a database that is used to store commodity information for detailed information about commodities that match the search keyword and whose distances to the location of the first client are less than the search radius; and
sending, by the e-commerce platform, a search response to the first client, wherein the search response carries the detailed information about the commodities found through searching.

2. The method according to claim 1, wherein before the sending, by the e-commerce platform, a search response to the first client, the method further comprises:
sequencing, by the e-commerce platform and in ascending order of distances, the detailed information about the commodities found through searching, wherein the distances are distances between locations of the commodities found through searching and the location of the first client; wherein
in this case, the sending, by the e-commerce platform, a search response to the first client, wherein the search response carries the detailed information about the commodities found through searching comprises:
sending, by the e-commerce platform, the search response to the first client, wherein the search response carries the sequenced detailed information about the commodities.

3. The method according to claim 1 or 2, wherein after the sending, by the e-commerce platform, a search response to the first client, the method further comprises:
displaying, by the first client, the received detailed information about the commodities on corresponding positions on an e-map according to the locations of the commodities, wherein the received detailed information about the commodities comprises information about the locations of the commodities.

4. The method according to claim 1 or 2, wherein before the receiving, by an e-commerce platform, a search request sent by a first client, the method further comprises:
receiving, by the e-commerce platform, a commodity shelving request sent by a second client, wherein the commodity shelving request carries detailed information about a commodity; and
saving, by the e-commerce platform, the detailed information about the commodity into the database that is used to store commodity information.

5. The method according to claim 4, wherein before the receiving, by the e-commerce platform, a commodity shelving request sent by a second client, the method further comprises:
receiving, by the e-commerce platform, a commodity basic information acquiring request sent by the second client, wherein the commodity basic information acquiring request carries picture data or bar code data of the commodity;
extracting, by the e-commerce platform, characteristic data in the picture data or bar code data, and searching, according to the characteristic data, a database that is used to store commodity characteristic data for basic information about the commodity that corresponds to the characteristic data, wherein the basic information about the commodity is used to describe common basic information about commodities of the same type as the commodity; and
sending, by the e-commerce platform, a commodity basic information acquiring response to the second client, wherein the commodity basic information acquiring response carries the basic information about the commodity, so that the second client determines detailed information about the commodity according to the basic information about the commodity.

6. The method according to claim 5, wherein that the second client determines detailed information about the commodity according to the basic information about the commodity comprises:
acquiring, by the second client, information about its location; and
determining, by the second client, the detailed information about the commodity according to the information about its location and the basic information about the commodity.

7. A search method based on an e-commerce platform, comprising:
acquiring, by a first client, information about its location;
sending, by the first client, a search request to an e-commerce platform, wherein the search request carries a search keyword, a search radius, and the information about the location of the first client; and
receiving, by the first client, a search response sent by the e-commerce platform, wherein the search response carries detailed information about commodities, the detail information about the commodities is found, in a database that is used to store commodity information, through searching by the e-commerce platform according to the search keyword, and distances between locations of the commodities and the location of the first client are less than the search radius.

8. The method according to claim 7, wherein after the receiving, by the first client, a search response sent by the e-commerce platform, the method further comprises:
displaying, by the first client, the detailed information about the commodities on corresponding positions on an e-map according to the locations of the commodities, wherein the detailed information about the commodities comprises information about the locations of the commodities.

9. An e-commerce platform, comprising:
a receiving module, configured to receive a search request sent by a first client, wherein the search request carries a search keyword, a search radius, and information about a location of the first client;
a searching module, configured to search, according to the search keyword received by the receiving module, a database that is used to store commodity information for detailed information about commodities that match the search keyword and whose distances to the location of the first client are less than the search radius; and
a sending module, configured to send a search response to the first client, wherein the search response carries the detailed information about the commodities found through searching by the searching module.

10. The e-commerce platform according to claim 9, further comprising:
a sequencing module, configured to sequence, in ascending order of distances, the detail information about the commodities found through searching by the searching module, wherein the distances are distances between locations of the commodities found through searching by the searching module and the location of the first client; wherein
in this case, the sending module is specifically configured to send the search response to the first client, wherein the search response carries the detailed information which is about the commodities and is sequenced by the sequencing module.

11. The e-commerce platform according to claim 9 or 10, wherein the receiving module is further configured to receive a commodity shelving request sent by a second client, wherein the commodity shelving request carries detailed information about a commodity; and
in this case, the e-commerce platform further comprises:
a saving module, configured to save the detailed information which is about the commodity and is received by the receiving module into the database that is used to store commodity information.

12. The e-commerce platform according to claim 11, wherein the receiving module is further configured to receive a commodity basic information acquiring request sent by the second client, and the commodity basic information acquiring request carries picture data or bar code data of the commodity;
in this case, the e-commerce platform further comprises a characteristic data extracting module, wherein the characteristic data extracting module is configured to extract characteristic data in the picture data or bar code data, wherein the picture data or bar code data is received by the receiving module;
the searching module is further configured to search, according to the characteristic data extracted by the characteristic data extracting module, a database that is used to store commodity characteristic data for basic information about the commodity that corresponds to the characteristic data, wherein the basic information about the commodity is used to describe common basic information about commodities of the same type as the commodity; and
the sending module is further configured to send a commodity basic information acquiring response to the second client, wherein the commodity basic information acquiring response carries the basic information about the commodity found through searching by the searching module, so that the second client determines detailed information about the commodity according to the basic information about the commodity.

13. A client performing a search based on an e-commerce platform, comprising:
a location information acquiring module, configured to acquire information about a location of the client itself;
a sending module, configured to send a search request to the e-commerce platform, wherein the search request carries a search keyword, a search radius, and the information which is about the location and is acquired by the location information acquiring module; and
a receiving module, configured to receive a search response sent by the e-commerce platform, wherein the search response carries detailed information about commodities, the detail information about the commodities is found, in a database that is used to store commodity information, through searching by the e-commerce platform according to the search keyword sent by the sending module, and distances between locations of the commodities and the location of the first client are less than the search radius.

14. The client according to claim 13, further comprising:
a displaying module, configured to display, on corresponding positions on an e-map according to the locations of the commodities, the detailed information which is about the commodities and is received by the receiving module, wherein the detailed information which is about the commodities and is received by the receiving module comprises information about the locations of the commodities.
